# EUROPÄISCHE PATENTSCHRIFT

(11) **EP 3 851 714 B1**
(45) Veröffentlichungstag und Bekanntmachung des Hinweises auf die Patenterteilung: **03.09.2025**
(21) Anmeldenummer: 21152003.6
(22) Anmeldetag: 18.01.2021
(51) Int. Cl.: F16J 3/02, F16K 7/12, F16K 37/00

(54) **MASCHINENLESBARE KENNZEICHNUNG EINER MEMBRAN**
MACHINE-READABLE MARKING OF A MEMBRANE
MARQUAGE LISIBLE PAR MACHINE D'UNE MEMBRANE

(30) Priorität: 20.01.2020 DE 102020101176
(43) Veröffentlichungstag der Anmeldung: 21.07.2021
(73) Patentinhaber: SISTO Armaturen S.A., 6468 Echternach (LU)
(72) Erfinder: SCHAAL, Andreas, 6468 Echternach (LU); BRITZ, Robert, 6468 Echternach (LU); DIECKMANN, Thomas, 6468 Echternach (LU); HACKENBERGER, Bernd, 6468 Echternach (LU)
(74) Vertreter: Busch, Tobias

(56) Entgegenhaltungen:
- EP-A1- 1 867 900
- EP-A1- 3 025 077
- EP-A1- 3 120 055
- EP-A1- 3 388 143
- EP-A1- 3 415 759
- WO-A1-2010/136183
- WO-A1-2017/156502
- DE-A1- 102011 100 556
- DE-A1- 19 829 084
- DE-U1- 202018 105 500
- US-A1- 2016 069 474
- US-A1- 2019 162 317

## Beschreibung

Die Erfindung betrifft eine Membran eines Membranventils, die Räume voneinander dichtend trennt, wobei die Membran zwischen Gehäuseteilen angeordnet ist.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch bewirkt werden kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Wenn Membranen in einem zugehörigen Membranventil verbaut sind, sind diese nicht mehr von außen sichtbar. Dies ist nachteilig, wenn die Membranen z. B. im Rahmen einer Instandhaltungsmaßnahme ausgetauscht werden müssen, da dann von außen nicht erkennbar ist, welcher Membrantyp im Membranventil verbaut ist. Aus diesem Grund sind Membranen mit einer angeformten Lasche bekannt geworden. Die Laschen stehen dabei derart vom Funktionsbereich der Membran ab, dass sie auch im verbauten Zustand der Membran sichtbar sind. Die Lasche ragt also gegenüber dem zugehörigen Membranventil hervor. Selbstverständlich müssten dafür die verwendeten Materialien auch visuell unterscheidbar sein, was sie in den seltensten Fällen sind.

Da während des Membranaustauschs üblicherweise die Maschinen oder Anlagen, in denen das betreffende Membranventil verbaut ist, außer Betrieb gesetzt werden müssen, ist es im Sinne einer schnellen Membrantauschaktion wichtig, dass der Membrantyp schnell und zuverlässig zu erkennen ist. Insbesondere muss dies auch bei schlecht zugänglichen und schlecht einsehbaren Bauräumen möglich sein. Ein Fehler beim Ermitteln des Membrantyps kann dabei zu Verzögerungen der Membrantauschaktion führen. Für den Fall, dass eine ungeeignete Membran versehentlich im Membranventil verbaut wird, kann es zu Fehlfunktionen des Membranventils kommen. Dies gilt es zu vermeiden.

Die DE 10 2013 214 304 A1 beschreibt ein Membranventil mit einer vierlagigen Ventilmembran, an der ein Datenträger in Form eines RFID-Chips vorhanden ist. So können nicht nur Daten betreffend die Materialien, die Abmessungen, die Herstellung und ähnliche Kenngrößen der Membran in dem Datenträger abgespeichert und/oder digital im System referenziert werden, sondern auch Daten betreffend den jeweiligen Kunden, die Lieferung, usw. All diese Daten können auf die jeweilige einzelne individuelle Membran ausgerichtet sein und auf deren zugehörigem Datenträger abgespeichert werden. Auf diese Weise kann nicht nur eine Membranverwechslung ausgeschlossen werden, sondern die zugeordneten Daten können die Basis für ein intelligentes Wartungssystem bilden.

Nachteilig ist der umfangreiche und anspruchsvolle Herstellungsprozess. Dabei müssen bei mindestens zwei Membranlagen Taschen in der Lasche ausgestanzt werden. Anschließend erfolgt die mühsame Zentrierung der einzelnen Lagen im Formnest, wobei die Taschenaussparungen genau übereinander platziert werden müssen, da sonst der RFID-Chip nicht eingelegt werden kann. Dabei muss akribisch darauf geachtet werden, dass die unterste Lage ohne Ausstanzung die Tasche verdeckt. Die obere, nicht ausgestanzte Lage muss zur Platzierung des RFID-Chips angehoben werden, ohne dass die dazwischen positionierte Verstärkungseinlage verrutscht. Wenn die oberste und unterste Lage nicht richtig positioniert sind, ist der RFID-Chip nach dem Vulkanisieren nicht dicht eingeschlossen, was für den späteren Einsatz in der sterilen pharmazeutischen Industrie bei Reinigungs- bzw. Sterilisationsprozessen ungünstig ist.

Die WO 2015/010810 A1 betrifft eine Membran, die mit einer Membranfläche versehen ist, die mit einer Lasche versehen ist. Die Membran und die Lasche sind aus mehreren Lagen aufgebaut, wobei mindestens eine der Lagen aus einem Elastomer besteht. In der Lasche ist ein elektronischer Datenträger angeordnet. Die Lasche weist eine obere und eine untere Schicht auf. Der Datenträger ist von den Lagen der Lasche und der oberen und der unteren Schicht umschlossen.

Die EP 3 388 143 A1 beschreibt ein Verfahren zum Herstellen einer Elastomer-Membran. Dieses umfasst ein Anordnen eines elektronischen Datenträgers zwischen zwei Lagen an einer vorbestimmten Position, wobei der elektronische Datenträger zumindest zeitweise mit einer Positionierhilfe verbunden ist. Ebenso vorgesehen ist ein Formpressen der zwei Lagen mit dem dazwischen angeordneten elektronischen Datenträger, wobei die Positionierhilfe ein Wandern des elektronischen Datenträgers aus der vorbestimmten Position heraus während des Formpressens begrenzt.

Die EP 1 867 900 A1 offenbart ein Trennelement für ein Druckausgleichgefäß, einen Druckspeicher oder einen Pulsationsdämpfer, wobei das Trennelement einen mehrlagigen Aufbau besitzt mit wenigstens zwei übereinander angeordneten flexiblen, fluiddichten Materiallagen. Das Trennelement kann einen Defekt bereits zu einem frühen Zeitpunkt feststellt.

Die DE 10 2017 128 229 A1 beschreibt eine Ventilmembran eines Membranventils, bei der ein RFID-Chip lediglich mit einem Ring in ein durchgestanztes Loch eingehängt wird. Auf diese Weise lassen sich zwar alle elektronischen Daten der Membran speichern und auslesen, jedoch ist der RFID-Chip nicht vor Umwelteinflüssen sowie vor den Betriebsmedien geschützt. Insbesondere Öle oder Schmutz oder dergleichen haben damit einen Einfluss auf die Auslesbarkeit von Daten aus dem Datenträger.

Die US 2019/162317 A1 zeigt eine Membran nach dem Oberbegriff von Anspruch 1.

Aufgabe der Erfindung ist es, eine Membran bereitzustellen, deren Daten flexibel zugeordnet werden können und deren Datenspeicher vor Umwelteinflüssen geschützt wird. Die Membran soll sich auf möglichst preiswerte sowie besonders einfache Weise und mit einem möglichst geringen Materialausschuss herstellen lassen. Dabei soll sich die Membran durch eine hohe Lebensdauer und möglichst geringe Herstellungskosten auszeichnen. Mit dem Verfahren soll eine hohe Stückzahl an Membrananordnungen in möglichst gleichbleibender Qualität hergestellt werden können.

Diese Aufgabe wird erfindungsgemäß durch eine Membran sowie einem Verfahren zur Herstellung der Membran gemäß den nebengeordneten Ansprüchen gelöst. Bevorzugte Varianten sind den Unteransprüchen, der Beschreibung und der Zeichnung zu entnehmen.

Gemäß der Erfindung weist mindestens eine Lage einen einstückigen Fortsatz aufweist, der einen aus einer Einspannung herausragenden und geformten Lappen bildet, wobei mindestens eine der Lagen eine Verformung zur Aufnahme des Datenträgers aufweist, wobei der elektronische Datenträger auf dem überstehenden Lappen auf einer Lage unter einer wulstartigen Materialansammlung eingebettet ist, wobei die Einbettung durch Einvulkanisieren mittels Compression-Moulding-Verfahrens erfolgt und wodurch der Wulst der Materialansammlung auf dem Lappen direkt sichtbar ist, dass ein elektronischer Datenträger integriert ist.

Beispielhaft kann in einer Membran zwischen zwei Lagen ein elektronischer Datenträger eingebettet werden (nicht erfindungsgemäß).

Gemäß der Erfindung werden durch die Verwendung eines elektronischen Datenträgers die Möglichkeiten der Zuordnung von Daten zu der Membran nahezu unbegrenzt erweitert. So können nicht nur Daten hinsichtlich des Materials, der Abmessungen, der Herstellung und weitere Kenngrößen der Membran in dem Datenträger gespeichert werden, sondern auch Daten, die den jeweiligen Kunden, die Lieferung und weitere Merkmale betreffen. Die gesamten Daten können dabei auf jede einzelne Membran ausgerichtet sein und auf deren integrierten Datenträger gespeichert werden. Durch das abgedichtete Einschließen des Datenträgers zwischen zwei Lagen der Membran mittels des Compression-Moulding-Verfahrens wird ein Schutz des Datenträgers vor Umwelteinflüssen sowie ein Schutz vor dem Betriebsmedium der Membran erreicht. Insbesondere Öle oder Schmutz oder dergleichen haben damit keinen Einfluss auf die Auslesbarkeit von Daten aus dem Datenträger.

Bei dem Datenträger kann es sich um jedes erdenkliche, elektronische Bauteil handeln, auf dem Daten gespeichert und wieder ausgelesen werden können. Besonders vorteilhaft kann es sich bei dem Datenträger um ein sogenanntes RFID-Element (RFID = radio frequency identification) handeln, das typischerweise einen Transponder aufweist, in den Daten geschrieben werden können, die dann von einem Lesegerät auch wieder gelesen werden können.

Vorzugsweise wird zwischen zwei Elastomer-Lagen eine Gewebeeinlage angeordnet. Anschließend erfolgt eine Vulkanisation der Elastomer-Lagen mit der Gewebeeinlage. Für höhere Einsatztemperaturen werden peroxid-vernetzte EPDM-Compounds eingesetzt. Vorzugsweise werden bei der Vulkanisation die Elastomer-Lagen, die neben Ethylen-Propylen-Dien-Kautschuk (EPDM) auch Schwefel bzw. aus Schwefel verwertete Stoffe, wie zum Beispiel Schwefeldifluorid, Katalysatoren bzw. Zinkoxid oder Fettsäuren enthalten können, wie auch mit Feststoffen verwertet sein können, erhitzt. Die Vulkanisation erfolgt meist mit einem Schwefelanteil von 1,8 bis 2,5 Gew.-% und einer Temperatur von ca. 120 bis 160°C. Dabei werden die langkettigen Kautschukmoleküle durch Schwefelbrücken vernetzt. Hierdurch gehen die plastischen Eigenschaften des Kautschuks bzw. der Kautschukmischung verloren und der Stoff wird mittels des Verfahrens der Vulkanisation vom plastischen in den elastischen Zustand überführt. In der Regel ist die Elastizität des Gummiwerkstoffs abhängig von der Anzahl der Schwefelbrücken. Je mehr Schwefelbrücken vorhanden sind, desto härter ist der Gummi. Die Anzahl der Schwefelbrücken ist wiederum abhängig von der zugesetzten Schwefelmenge und der Dauer der Vulkanisation.

Die EPDM-Lagen, die im Compression-Moulding-Verfahren zur Membran vulkanisiert werden, können vorteilhafterweise sehr dünn ausgeführt sein. So ist es durchaus möglich, dass die Lagen nur 0,5 - 2 mm betragen. Durch den besonderen Prägevorgang, der vor dem Vulkanisieren stattfindet, kann in den leicht plastisch verformbaren Lagen ein Hohlraum geformt werden, in denen das kleine RFID-Element eingefügt werden kann. Vorteilhafterweise kann das RFID-Element von den mindestens zwei EPDM-Lagen umschlossen und durch das Vulkanisieren abgedichtet eingebettet werden. Dies ist ein besonders vorteilhafter Schutz für den Einsatz in pharmazeutischen Anlagen, in denen häufig Desinfektionsprozesse durchgeführt werden.

Vorzugsweise besteht der innere Bereich der Membran aus einem elastomeren Werkstoff. Vorteilhafterweise aus Ethylen-Propylen-Dien-Kautschuk. Bei einer Variante der Erfindung kann zwischen zwei Lagen eine Gewebeeinlage eingebettet sein und das so entstehende Compound wird vulkanisiert. Die Gewebeeinlagen verstärken den inneren Bereich der Membran.

Als besonders günstig erweist es sich, wenn bei der Membrananordnung ein stiftartiges Element formschlüssig in eine Lage integriert wird. Bei dem stiftartigen Element kann es sich um eine Membranschraube handeln. Die Membranschraube kann beispielsweise über eine Spindel mit einem Antrieb verbunden sein. Auf diese Weise kann die Membran verformt werden.

Erfindungsgemäß steht der Lappen über die Membranfläche und damit über den Funktionsbereich der Membran heraus. Dadurch ist der Lappen und der im Lappen integrierte Datenträger von den Prozessbedingungen und den Membranbewegungen entkoppelt. Durch die vorteilhafte Anordnung des Datenträgers in dem Lappen wird erreicht, dass ein Lesegerät im Umfeld des Datenträgers platziert und mit dem Lesegerät Daten aus dem Datenträger ausgelesen werden können. Insbesondere kann auf diese Weise erreicht werden, dass beispielsweise Gehäuseteile, zwischen die die Membran verbaut ist, keinen oder nur einen geringen Einfluss auf die Platzierung des Lesegeräts bzw. die Auslesbarkeit der Daten haben.

In einer weiteren Variante der Erfindung wird der elektronische Datenträger auf dem überstehenden Lappen angeordnet und unter einer wulstartigen Materialansammlung mittels des Compression-Moulding-Verfahrens (ein)vulkanisiert. Bei dieser Variante kann der Prägevorgang entfallen, gleichzeitig ist der elektronische Datenträger vor Umwelteinflüssen geschützt. Erfindungsgemäß ist durch den Wulst der Materialansammlung auf dem Lappen direkt sichtbar, dass ein elektronischer Datenträger integriert ist.

Vorteilhafterweise gliedert sich das Verfahren zur Herstellung der Membran in aufeinander folgende Fertigungsschritte. Dabei werden zunächst EPDM-Lagen aus kalandrierten Bahnen im Membranformat ausgeschnitten. An jede Lage wird an einer Seite ein Fortsatz mit ausgeschnitten, der über den späteren Funktionsausschnitt der Membran herausragen wird. Die EPDM-Lagen werden vorteilhafterweise in ein Formnest aufeinander gebettet, so dass die Fortsätze einheitlich übereinander angeordnet sind. Zwischen den Lagen kann zur Stabilisierung der Membran eine Gewebeeinlage eingefügt und zusätzlich eine Membranschraube angeordnet werden. In einer besonders vorteilhaften Variante der Erfindung drückt ein Prägestempel zwischen die zwei übereinander angeordneten Fortsätze einen Hohlraum, in den ein RFID-Element eingelegt wird. Anschließend wird das Formnest verschlossen und die Vulkanisation unter üblichen Temperatur- sowie Druckbedingungen durchgeführt, so dass das RFID-Element dicht zwischen zwei EPDM-Lagenfortsätzen, die bei der Vulkanisation einen über die Funktionsfläche der Membran herausragenden Lappen bilden, oder unter einer Materialansammlung auf einem Fortsatz verschlossen ist.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine Schnittdarstellung einer Membrananordnung,
- Figur 3: eine Darstellung eines nicht erfindungsgemäßen Membranlappens,
- Figur 4: eine Darstellung eines erfindungsgemäßen Membranlappens mit wulstartiger Materialansammlung,
- Figur 5: eine Darstellung bei der der Datenträger sichtbar ist (nicht erfindungsgemäß).

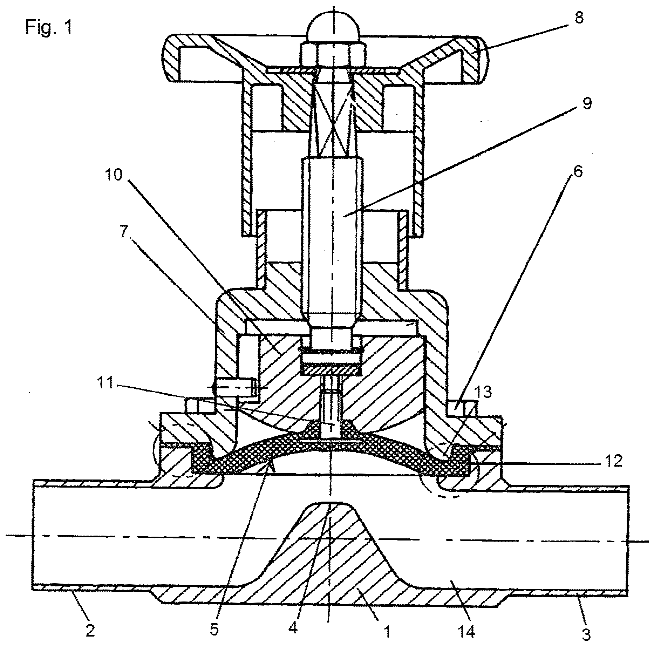

Das in Figur 1 dargestellte Membranventil besitzt ein Gehäuseunterteil 1, welches Anschlüsse 2, 3 und ein Wehr 4 umfasst. Das Wehr 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass sich die Membran 5 verformt und der freie Querschnitt zwischen dem Wehr und der Membrananordnung vergrößert bzw. verkleinert werden kann.

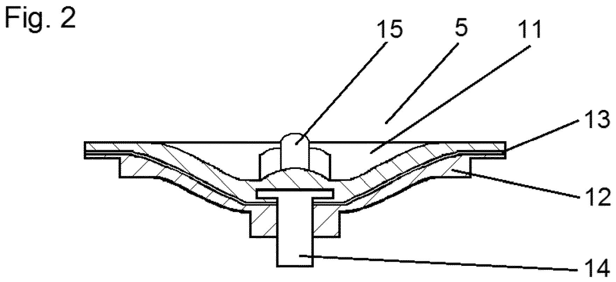

Figur 2 zeigt eine Schnittdarstellung einer Membran 5. Die Membran 5 umfasst eine erste Lage 11, die auf der Mediumseite angeordnet ist. Weiterhin umfasst die Membran 5 eine zweite Lage 12, welches die Rückseite der Membrananordnung bildet. Die beiden Lagen 11 und 12 sind aus einem Elastomer, insbesondere EPDM, gefertigt. Zwischen den beiden EPDM-Lagen 11, 12 ist eine Gewebe-Einlage 13 angeordnet. Weiterhin umfasst die Membran 5 ein stiftartiges Element 14, das im Ausführungsbeispiel als Membranschraube ausgebildet ist.

Die erste Lage der Membran 5, die der Mediumseite zugeordnet ist, weist eine Dichtlippe 15 auf. Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in einem Druckstück 10 ausgebildet ist. Bei der Membran 5 gemäß der Darstellung in Figur 2 handelt es sich um ein Compound aus zwei EPDM-Lagen 11, 12 und einer dazwischen angeordneten Gewebe-Einlage 13, die durch Vulkanisation miteinander verbunden sind.

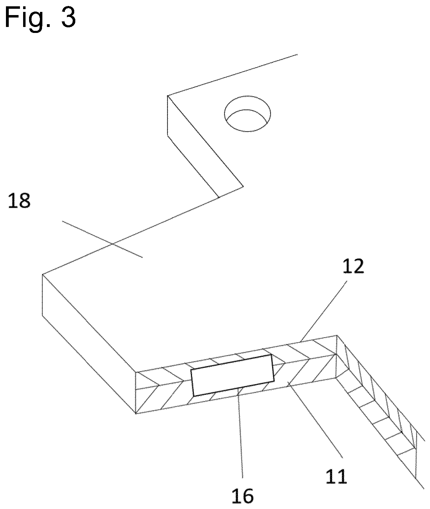

Figur 3 zeigt eine Seitenansicht eines über den Funktionsbereich herausragenden nicht erfindungsgemäßen Lappens 18. Gemäß der Darstellung in Figur 3 ist zwischen dem Compound aus zwei EPDM-Lagen 11, 12 ein RFID-Element 16 eingebettet. Dieses RFID-Element 16 ist im eingebauten Zustand für ein Lesegerät gut zugänglich, so dass die Membrandaten ausgelesen und gegebenenfalls von einer Wartungssoftware verwaltet werden können.

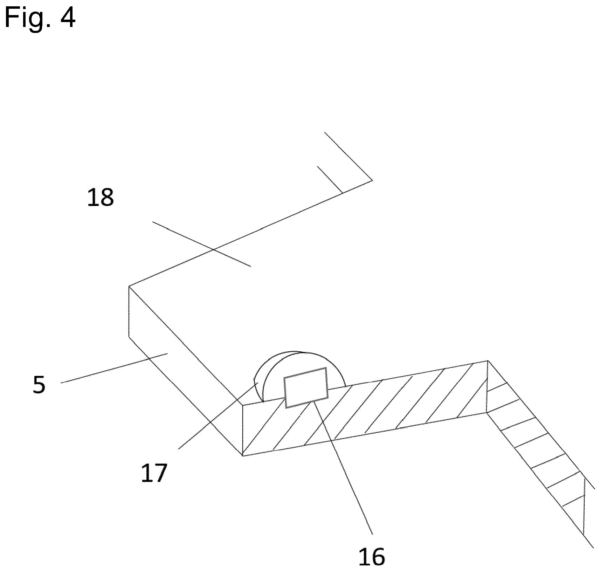

Figur 4 zeigt eine Seitenansicht eines über den Funktionsbereich herausragenden erfindungsgemäßen Lappens 18. Auf dem Lappen 18 ist ein RFID-Element 16 angeordnet, welches unter einer EPDM-Materialansammlung 17 eingebettet ist.

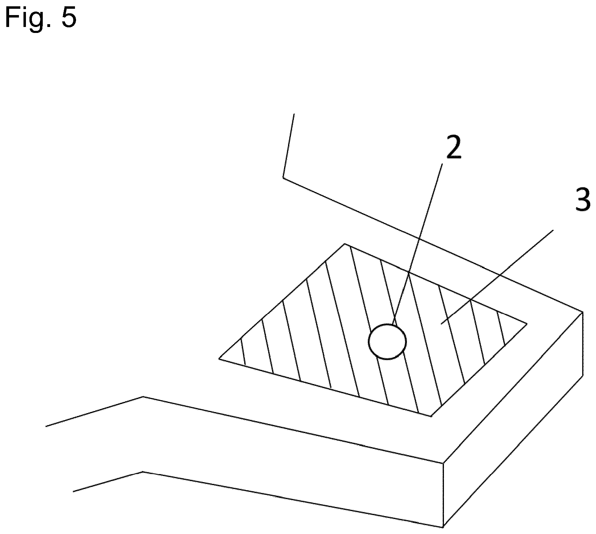

Figur 5 zeigt eine Draufsicht auf eine Variante bei der der Datenträger in einer Verformung eingebracht ist, wobei bei dieser Variante der Datenträger sichtbar ist (nicht erfindungsgemäß).

## Patentansprüche

1. Membran (5), die mindestens zwei Lagen (11, 12) umfasst und in der ein elektronischer Datenträger (16) integriert ist, wobei mindestens eine Lage (11, 12) einen einstückigen Fortsatz aufweist, der einen aus einer Einspannung herausragenden und geformten Lappen (18) bildet, wobei mindestens eine der Lagen (11, 12) eine Verformung zur Aufnahme des Datenträgers aufweist, wobei der elektronische Datenträger (16) auf dem überstehenden Lappen (18) auf einer Lage (12) unter einer wulstartigen Materialansammlung (17) eingebettet ist,
**dadurch gekennzeichnet, dass** die Einbettung durch Einvulkanisieren mittels Compression-Moulding-Verfahrens erfolgt und wodurch beim Wulst der Materialansammlung (17) auf dem Lappen (18) direkt sichtbar ist, dass ein elektronischer Datenträger integriert ist.

2. Membran nach Anspruch 1, **dadurch gekennzeichnet, dass** mindestens eine Lage (11) aus einem Ethylen-Propylen-Dien-Kautschuk (EPDM) besteht.

3. Membran nach Anspruch 1 bis 2, **dadurch gekennzeichnet, dass** die Lagen (11, 12) eine Dicke von weniger als 5 mm, vorzugsweise weniger als 3 mm, insbesondere weniger als 2 mm, und/oder mehr als 0,2 mm, vorzugsweise mehr als 0,4 mm, insbesondere mehr als 0,6 mm, aufweisen.

4. Membran nach einem der Ansprüche 1 bis 3, **dadurch gekennzeichnet, dass** zwischen den Lagen (11, 12) zur Erhöhung der Festigkeit Gewebeeinlagen (13) eingebracht sein können.

5. Membran nach einem der Ansprüche 1 bis 4, **dadurch gekennzeichnet, dass** zwischen zwei Lagen ein stiftartiges Element (14), vorzugsweise eine Membranschraube, integriert ist.

6. Membran nach einem der Ansprüche 1 bis 5, **dadurch gekennzeichnet, dass** der elektronische Datenträger (16) ein RFID-Element ist.

7. Verfahren zur Herstellung einer Membran nach einem der Ansprüche 1 bis 6, die einen elektronischen Datenträger (16) aufweist, **dadurch gekennzeichnet, dass** mindestens eine Lage (12) zur Aufnahme des Datenträgers verformt wird.

8. Verfahren nach Anspruch 7, **dadurch gekennzeichnet, dass** die Verformung durch das Drücken einer Kuhle und/oder das Prägen eines Hohlraumes erzeugt wird.

9. Verfahren nach einem der Ansprüche 7 oder 8, **dadurch gekennzeichnet, dass** der elektronische Datenträger (16) vor dem Durchführen des Compression-Moulding-Verfahrens in die Verformung eingebracht wird.

10. Verfahren nach einem der Ansprüche 7 bis 9, **dadurch gekennzeichnet, dass** der elektronische Datenträger (16) nach dem Compression-Moulding-Verfahren in der Membran (5) dicht verschlossen eingebracht ist.

## Claims

1. Membrane (5) which comprises at least two layers (11, 12) and in which an electronic data carrier (16) is integrated, wherein
at least one layer (11, 12) has an integral extension,
which forms a lug (18) which is shaped and projects from a clamping point, wherein at least one of the layers (11, 12) has a deformation for receiving the data carrier, wherein the electronic data carrier (16) is embedded on the protruding lug (18) on a layer (12) under a bead-like material accumulation (17),
**characterized in that** the embedding is effected by vulcanization by means of a compression moulding method and as a result it is directly visible from the bead of the material accumulation (17) on the lug (18) that an electronic data carrier is integrated.

2. Membrane according to Claim 1, **characterized in that** at least one layer (11) consists of an ethylenepropylene-diene rubber (EPDM).

3. Membrane according to Claims 1 to 2, **characterized in that** the layers (11, 12) have a thickness of less than 5 mm, preferably less than 3 mm, in particular less than 2 mm, and/or more than 0.2 mm, preferably more than 0.4 mm, in particular more than 0.6 mm.

4. Membrane according to any of Claims 1 to 3, **characterized in that** fabric inserts (13) can be introduced between the layers (11, 12) in order to increase the strength.

5. Membrane according to any of Claims 1 to 4, **characterized in that** a pin-like element (14), preferably a membrane screw, is integrated between two layers.

6. Membrane according to any of Claims 1 to 5, **characterized in that** the electronic data carrier (16) is an RFID element.

7. Method for producing a membrane according to any of Claims 1 to 6, which membrane has an electronic data carrier (16), **characterized in that** at least one layer (12) is deformed for receiving the data carrier.

8. Method according to Claim 7, **characterized in that** the deformation is produced by pressing a depression and/or embossing a cavity.

9. Method according to either of Claims 7 and 8, **characterized in that** the electronic data carrier (16) is introduced into the deformation prior to carrying out the compression moulding method.

10. Method according to any of Claims 7 to 9, **characterized in that** the electronic data carrier (16) has been introduced in a manner tightly sealed in the membrane (5) after the compression moulding method.

## Revendications

1. Membrane (5) comprenant au moins deux couches (11, 12) et dans laquelle est intégré un support de données électronique (16),
au moins une couche (11, 12) présentant une extension d'un seul tenant,
formant une languette profilée (18) dépassant d'une partie de serrage, au moins une des couches (11, 12) présentant une déformation destinée à recevoir le support de données, le support de données électronique (16) étant encastré sur la languette saillante (18) sur une couche (12) sous une accumulation de matière (17) formant un bourrelet,
**caractérisée en ce que** l'encastrement est réalisé par vulcanisation au moyen d'un procédé de moulage par compression, ce qui permet de voir directement, au niveau de l'accumulation de matière (17) du bourrelet sur la languette (18), qu'un support de données électronique est intégré.

2. Membrane selon la revendication 1, **caractérisée en ce qu'**au moins une couche (11) est constituée d'un caoutchouc éthylène-propylène-diène (EPDM).

3. Membrane selon les revendications 1 à 2, **caractérisée en ce que** les couches (11, 12) ont une épaisseur inférieure à 5mm, de préférence inférieure à 3mm, en particulier inférieure à 2mm, et/ou supérieure à 0,2mm, de préférence supérieure à 0,4mm, en particulier supérieure à 0,6mm.

4. Membrane selon l'une des revendications 1 à 3, **caractérisée en ce que** des inserts tissés (13) sont aptes à être insérés entre les couches (11, 12) afin d'augmenter la résistance.

5. Membrane selon l'une des revendications 1 à 4, **caractérisée en ce qu'**un élément en forme de tige (14), de préférence une vis à membrane, est intégré entre deux couches.

6. Membrane selon l'une des revendications 1 à 5, **caractérisée en ce que** le support de données électronique (16) est un élément RFID.

7. Procédé de fabrication d'une membrane selon l'une des revendications 1 à 6, qui inclut un support de données électronique (16), **caractérisé en ce qu'**au moins une couche (12) destinée à recevoir le support de données est déformée.

8. Procédé selon la revendication 7, **caractérisé en ce que** la déformation est produite par le pressage d'une cavité et/ou l'estampage d'une cavité.

9. Procédé selon l'une des revendications 7 ou 8, **caractérisé en ce que** le support de données électronique (16) est introduit dans la déformation avant la mise en œuvre du procédé de moulage par compression.

10. Procédé selon l'une des revendications 7 à 9, **caractérisé en ce que** le support de données électronique (16) est introduit dans la membrane (5) de manière étanche après le procédé de moulage par compression.
